(19) **Europäisches Patentamt**

**European Patent Office**

**Office européen des brevets**

(11) **EP 1 266 872 B1**

(12) **EUROPÄISCHE PATENTSCHRIFT**

(45) Veröffentlichungstag und Bekanntmachung des Hinweises auf die Patenterteilung:
**28.12.2005 Patentblatt 2005/52**

(51) Int Cl.$^7$: **C03C 1/00**, C03C 3/091

(21) Anmeldenummer: **01114173.6**

(22) Anmeldetag: **12.06.2001**

(54) **Verfahren zur Herstellung von Borosilikatgläsern**

Method for producing borosilicate glasses

Méthode de production de verres borosilicatés

(84) Benannte Vertragsstaaten:
**AT BE CH CY DE DK ES FI FR GB GR IE IT LI LU MC NL PT SE TR**

(43) Veröffentlichungstag der Anmeldung:
**18.12.2002 Patentblatt 2002/51**

(73) Patentinhaber: **Schott AG**
**55122 Mainz (DE)**

(72) Erfinder:
• **Naumann, Karin, Dr.**
**55270 Ober-Olm (DE)**
• **Ott, Franz, Dr.**
**95666 Mitterteich (DE)**
• **Kass, Christof**
**95643 Tirschenreuth (DE)**

(56) Entgegenhaltungen:
**EP-A- 0 297 255**      **JP-A- 10 025 132**
**JP-A- 10 324 526**      **US-A- 1 995 952**

## Beschreibung

Die Erfindung betrifft ein Verfahren zur Herstellung von Borosilicatgläsern unter Zusatz eines Läutermittels zur Gemengezubereitung. Die Erfindung betrifft ein Verfahren zur Herstellung von Borosilicatgläsern mit hoher chemischer Beständigkeit, speziell mit einer hydrolytischen Beständigkeit der hydrolytischen Klasse 1.

Verfahren zur Herstellung von Gläsern bestehen aus den Verfahrensschritten, Gemengezubereitung, Gemengeeinlegen in die Schmelzwanne, Schmelzen des Glases und dessen anschließende Heißformgebung. Unter den Begriff Schmelzen sind hier auch die sich an das Einschmelzen anschließenden Schritte Läutern, Homogenisieren und Konditionieren zur weiteren Verarbeitung zusammengefasst.

Unter Läuterung versteht man in Bezug auf Schmelzen die Entfernung von Gasblasen aus der Schmelze. Um höchste Fremdgas- und Blasenfreiheit zu erzielen, bedarf es der gründlichen Durchmischung und Entgasung des geschmolzenen Gemenges. Das Verhalten von Gasen bzw. Blasen in der Glasschmelze sowie deren Entfernung sind beispielsweise in "Glastechnische Fabrikationsfehler", herausgegeben von H. Jebsen-Marwedel und R. Brückner, 3. Auflage, 1980, Springer-Verlag, Seite 195 ff. beschrieben.

Unter den Läuterverfahren sind die chemischen Läuterverfahren die häufigsten. Ihr Prinzip besteht darin, dass der Schmelze bzw. bereits dem Gemenge

- Verbindungen zugesetzt werden, die sich in der Schmelze zersetzen und dabei Gase freisetzen, oder
- Verbindungen, die bei höheren Temperaturen flüchtig sind, oder
- Verbindungen, die in einer Gleichgewichtsreaktion bei höheren Temperaturen Gase abgeben.

Dadurch wird das Volumen vorhandener Blasen vergrößert und deren Auftrieb verstärkt. Zu den letztgenannte Verbindungen gehören die sogenannten Redox-Läutermittel wie beispielsweise Antimonoxid, Arsenoxid. Bei diesem in der Praxis am allerhäufigsten eingesetzten Verfahren werden als Redox-Läutermittel polyvalente Ionen eingesetzt, die in mindestens zwei Oxidationsstufen auftreten können, welche in einem temperaturabhängigen Gleichgewicht untereinander stehen, wobei bei hohen Temperaturen ein Gas, meistens Sauerstoff, freigesetzt wird.

Zu der zweiten Gruppe, den Verbindungen, die bei hohen Temperaturen aufgrund ihres Dampfdruckes flüchtig sind und dadurch wirken, gehören z. B. Natriumchlorid und verschiedene Fluoride. Sie werden unter dem Begriff Verdampfungsläutermittel zusammengefasst.

Die Redox- und die Verdampfungsläuterung ist an die Temperaturen gebunden, bei denen aufgrund der thermodynamischen Gegebenheiten die entsprechenden Redox- oder Verdampfungs- (oder auch Sublimations-)prozesse ablaufen. Für viele Glasschmelzen wie die Schmelzen von Kalk-Natron-Gläsern und anderer relativ niedrig schmelzender Gläser (z. B. Boratgläser, Bleigläser) reichen diese Möglichkeiten aus.

Jedoch sind bei Gläsern mit Schmelztemperaturen (Temperatur bei der Viskosität ca. $10^2$ dPas) zwischen ca. 1550 °C und 1700 °C, was für eine ausreichende Läuterung Läutertemperaturen von mehr als 1600°C bedeutet, aufgrund erhöhter Viskosität der Glasschmelze die Blasen schlechter zu entfernen. Die Wachstumsneigung der Blasen ist geringer, und sie steigen schlechter auf als bei niedrigeren Viskositäten. So kommt es zur Bildung feiner Blasen, die auch durch Durchsatzreduzierung oder durch höhere Temperaturen nur sehr schwer oder gar nicht mehr entfernbar sind, was solche Gläser unbrauchbar macht. Denn die Resorptionswirkung der chemischen Redox-Läutermittel, z. B. des $Sb_2O_3$, d. h. die Fähigkeit beim Abkühlen den Sauerstoff oder andere Gase aus den feinen Blasen zu resorbieren und damit zu entfernen, reicht bei vielen hochschmelzenden Gläsern nicht aus.

Die prinzipiell in gewissem Rahmen vorhandenen Möglichkeiten der Erhöhung der Temperaturen zur Viskositätserniedrigung sowie der Verlängerung der Schmelz- und Läuterzeiten sind außerdem nicht wirtschaftlich Durch übermäßig hohe Schmelztemperaturen würde das Feuerfestmaterial der Wanne zu stark angegriffen, was zu Glasfehlern und zur Verkürzung der Wannenlebensdauer führt. Bei Verlängerung der Schmelz- und Läuterzeiten würde die Schmelzleistung zu niedrig.

Ein weiterer Nachteil vieler Redox-Läutermittel und Verdampfungsläutermittel ist, dass sie umweltgefährdend, zumindest jedoch nicht umweltfreundlich sind.

Dies gilt z. B. für Arsenoxid und auch für Antimonoxid. Alternative Redox-Läutermittel, beispielsweise Ceroxid, sind relativ teure Ersatzsubstanzen.

Zu den genannten hochschmelzenden Gläsern mit Schmelztemperaturen von ca. 1600°C gehören auch die Borosilicatgläser. Von besonderer Bedeutung für viele Anwendungen sind aufgrund ihrer geringen Wechselwirkung mit der Umgebung die sogenannten Neutralgläser aus der Gruppe der Borosilicatgläser, das heißt Gläser mit einer hohen hydrolytischen Beständigkeit, nämlich der hydrolytischen Klasse 1 (DIN ISO 179).

Zur erstgenannten Art der chemischen Läuterung, also der Läuterung mittels Verbindungen, die sich zersetzen und dabei Gase freisetzen, gehört die Sulfat-Läuterung. Auch sie ist bekannt für niedrigschmelzende Gläser, so für Kalk-Natron-Gläser beispielsweise für Flaschen- oder Fensterglas, da das üblicherweise eingesetzte $Na_2SO_4$ (bei Massengläsern auch als Glaubersalz $Na_2SO_4 \cdot 10\,H_2O$) mit dem stets vorhandenen $SiO_2$ schon bei, verglichen mit dem alleine relativ stabilen $Na_2SO_4$, tiefen Temperaturen gemäß

$$Na_2SO_4 + SiO_2 \rightarrow Na_2O \cdot SiO_2 + SO_3$$

reagiert.

$SO_3$ reagiert weiter zu $SO_2$ und ½ $O_2$, die die eigentlichen Läuterreagenzien darstellen.

Aufgabe des Läutermittels beim chemischen Läuterverfahren mit Sulfat ist es, die während des Schmelzprozesses freigesetzten Gase zu entfernen. Dabei müssen sich die Läutermittelgase in der Glasschmelze, der sogenannten Rauhschmelze bei relativ niedrigen Temperaturen, homogen physikalisch lösen, um dann bei höheren Temperaturen das Gas als Blase freisetzen zu können. Die Gasblasenbildung durch das Läutermittel ist stark temperaturabhängig; die Temperatur beeinflusst nicht nur die Viskosität der Glasschmelze, sondern auch die physikalische Löslichkeit der Gase im Glas. Steigt die Temperatur in der Läuterphase, so sinkt die Löslichkeit der Gase im Glas, und es kommt zur Blasenbildung aufgrund der Übersättigung bei höherer Temperatur. Die aus dem Läutermittel in Blasenform freigesetzten Gase vergrößern die kleinen, vom Schmelzprozess zurückgebliebenen Gasbläschen und ermöglichen so ihr Aufsteigen und damit Entfernen aus der Schmelze. Dafür ist es aber nötig, dass sich genügend Läutergas im Glas löst, um dann bei der höheren Temperatur, der Läutertemperatur freigesetzt zu werden.

Die Löslichkeit, hier also die $SO_2$-Löslichkeit, ist aber nicht nur abhängig von der Temperatur, sondern auch von der Basizität des Glases.

Die bekanntermaßen gut mit Sulfat läuterbaren Kalk-Natron-Gläser sind Gläser mit einem hohen Alkali- und einem hohen Erdalkaligehalt. Bedingt durch den hohen Alkaligehalt sind diese Gläser basisch. Ebenfalls bedingt durch den hohen Alkaligehalt besitzen sie also eine hohe $SO_2$-Löslichkeit.

Daraus kann geschlossen werden, dass die Wirkung von $SO_3$ als Läutermittel aufgrund der $SO_2$-Löslichkeit umso größer ist, je höher die Basizität (der Alkaligehalt) der Gläser ist.

Basische Gläser zeigen schlechte chemische Beständigkeiten, insbesondere schlechte hydrolytische und schlechte Säurebeständigkeiten, da ihre hohen Alkalianteile leicht aus dem Glas lösbar sind. So weisen Kalk-Natron-Gläser hydrolytische Beständigkeiten lediglich der hydrolytischen Klassen $\geq$ 3 (DIN ISO 719) und Säurebeständigkeiten der Säureklassen > 2 (DIN 12116) auf.

Es sind auch bereits Sulfat-geläuterte Gläser für PDP-Substrate bekannt. Hierbei handelt es sich um hoch alkali- und erdalkalihaltige Silicatgläser ohne oder mit wenig Borsäure und mit hohem $Al_2O_3$-Gehalt, die hohe thermische Dehnungen aufweisen. Auch die Gläser sind mit Schmelztemperaturen < 1600 °C relativ niedrig schmelzend und haben basischen Charakter.

Aus der Patentliteratur sind auch bereits borhaltige, jedoch ausweislich der Beispiele $SiO_2$-arme Gläser aus einem weiten Zusammensetzungsbereich bekannt, die auch Sulfat, jedoch nur neben anderen Läutermitteln, enthalten können. So beschreibt JP 10-25132 A alkalifreie Gläser, denen neben $SO_3$ stets Chlorid, angegeben als bis zu 2 Gew.-% $Cl_2$, zugesetzt wird, während JP 10-324526 A alkalifreie Gläser nennt, denen zur Reduzierung des $As_2O_3$-Anteils eine Komponente aus der Gruppe $Fe_2O_3$, $Sb_2O_3$, $SnO_2$, $SO_3$ und eine aus der Gruppe Cl, F zugesetzt wird. US 1,995,952 betrifft die Läuterung von erdalkalifreien borhaltigen Gläsern.

Der Erfindung liegt die Aufgabe zugrunde, ein Verfahren zur Herstellung von Borosilicatgläsern hoher hydrolytischer Beständigkeit bereitzustellen, bei dem die Glasschmelze effektiv geläutert wird, d. h. bei dem Glas mit hoher Qualität bzgl. Blasenfreiheit bzw. -armut resultiert, das eine kostengünstige nicht toxische Läuterung der Glasschmelzen, insbesondere bei hohen Temperaturen schmelzender Gläser ermöglicht.

Die Aufgabe wird durch das Verfahren gemäß Patentanspruch 1 gelöst.

In dem Verfahren zur Herstellung von Borosilicatgläsern der hydrolytischen Klasse 1 mit den Verfahrensschritten Gemengezubereitung, Schmelzen des Glases und anschließende Heißformgebung, wobei unter dem Begriff Schmelzen neben dem Aufschmelzen der Rohstoffe und Scherben auch die sich anschließenden Schritte Läutern und Homogenisieren zusammengefasst sind, wird ein Borosilicatglas mit wenigstens 3 Gew.-% $Li_2O + Na_2O + K_2O$ und mit wenigstens 1 Gew.-% $MgO + CaO + SrO + BaO + ZnO$ erschmolzen und wird dem Gemenge wenigstens ein Läutermittel, und zwar zwischen 0,01 Gew.-% und 0,8 Gew.-% Sulfat(e), angegeben als $SO_3$, zugegeben. 0,05 Gew.-% $SO_3$ entsprechen beispielsweise 0,15 Gew.-% $BaSO_4$. 0,6 Gew.-% $SO_3$ entsprechen 2,0 Gew.-% $BaSO_4$. Bevorzugt ist ein Zusatz von Sulfat(en) gemäß 0,05 Gew.-% bis 0,6 Gew.-% $SO_3$.

Durch den Sulfat-Zusatz wird die Bildung und das Wachstum von Gasblasen in der Glasschmelze initiiert. Schon mit der als Untergrenze genannten geringen Menge werden die Borosilicatgläser mit der genannten hohen hydrolytischen Beständigkeit (hydrolytische Klasse 1) wirksam geläutert. Die hohe hydrolytische Beständigkeit geht einher mit einer geringen Basizität, d. h. diese hoch beständigen Gläser besitzen sauren Charakter.

Aufgrund des bisherigen Wissens über die Sulfat-Läuterung war es nicht vorhersehbar und völlig überraschend, dass die Läuterwirkung in den sauren und relativ hochschmelzenden Borosilicatglasschmelzen ausreichend gut ist. Dies ist um so überraschender, als die $SO_2$-Löslichkeit in sauren Borosilicatgläsern sehr gering ist. So beträgt der $SO_3$-Gehalt in Borosilicatgläsern max. ca. 0,01 Gew.-%, während er in Kalk-Natrongläsern bis zu 0,5 Gew.-% beträgt. Die Läuterwirkung tritt sogar auch ohne Zusatz von Reduktionsmittel ein. Es können sogar Nitrate als Rohstoffe eingesetzt werden, und polyvalente Verbindungen können in ihrer oxidierten Form, z. B. $Fe_2O_3$, zugesetzt werden, ohne daß die Glasqualität beeinträchtig wird.

Das Sulfat kann in Form eines oder mehrerer Sulfate, z. B. $MgSO_4$, $CaSO_4$, $BaSO_4$, $ZnSO_4$, $Na_2SO_4$ oder andere Alkali- und/oder Erdalkalisulfat(e), zugegeben werden, wobei die Verwendung von $Na_2SO_4$ alleine oder mit $BaSO_4$ bevorzugt ist. Das verwendete Sulfat muss dabei so ausgewählt sein, dass die Freisetzung von $SO_2$ und $O_2$ an die Viskosität der Glasschmelze bzw. an die Läutertemperatur des Glases angepasst ist. Es muss nämlich zum Zeitpunkt der Läuterung noch unzersetztes Sulfat zur Verfügung stehen, das sich dann - ohne zusätzliche Reduktionsmittel - zu $SO_2$ und $O_2$ zersetzt und damit die Entgasung des Glases bewirkt. Bei zu früher Freisetzung erfolgt keine ausreichende Läuterung, und das Glas bleibt gispig. Der Fachmann ist ohne weiteres in der Lage, die relevanten Wannen- und Schmelzparameter entsprechend anzupassen.

Auch eine hohe Säurebeständigkeit geht einher mit einer geringen Basiszität.

So ist es analog zur Anwendung des Verfahrens auf Gläser mit hoher hydrolytischer Beständigkeit ebenso überraschend und vorteilhaft, daß das Verfahren auch auf Borosilicatgläser mit hoher Säurebeständigkeit, das heißt einer Säureklasse 1 oder 2, angewandt werden kann. Auch bei solchen Gläsern bzw. bei solchen Gläsern mit einer Zugehörigkeit sowohl zur hydrolytischen Klasse 1 als auch zur Säureklasse 1 oder 2 zeigt das Verfahren seine sehr gute Läuterwirkung.

Bei dem erfindungsgemäßen Verfahren können neben dem erfindungswesentlichen Sulfat noch Fluorid und Chlorid, die als Fluss- und Verdampfungsläutermittel dienen, zugesetzt werden. So können die nach dem Verfahren hergestellten Gläser bis zu 0,5 Gew.-% F, vorzugsweise wenigstens 0,0025 Gew.-%, bevorzugt zwischen 0,005 und 0,4 Gew.-% F enthalten. Aufgrund der hohen Flüchtigkeit der Fluoride bedeuten diese Gehalte einen Fluorid-Zusatz zum Gemenge von 0,005 - 1,0, bevorzugt 0,01 - 0,6 Gew.-%, beispielsweise als $CaF_2$.

Die Gläser können auch bis zu 0,3 Gew.-% Cl⁻ enthalten, Dies bedeutet aufgrund der Flüchtigkeit der Chloride ein Zusatz von bis zu 0,6 Ges.-% Cl⁻, beispielsweise als NaCl im Gemenge. Bei höheren Anteilen käme es bei der Weiterverarbeitung der Gläser zu Ausdampfungen, die sich als störender Belag auf der Oberfläche niederschlagen (sogenannte Lampenringe). Vorzugsweise wird den Gläsern wenigstens 0,015 Gew.-% zugesetzt. Vorzugsweise enthalten die Gläser bis zu 0,08 Gew.-% Cl⁻. Auch die Gläser, denen kein Chlorid zugesetzt wird, können bei Verwendung üblicher Rohstoffe bis zu 100 ppm Cl⁻ als Verunreinigung enthalten. Bei Verwendung besonders reiner Rohstoffe könnte auch dieser Gehalt auf < 100 ppm gesenkt werden.

Die nach dem erfindungsgemäßen Verfahren hergestellten Gläser können weiter folgende polyvalente Verbindungen enthalten: bis zu 5 Gew.-% $Fe_2O_3$, vorzugsweise bis zu 2 Gew.-% $Fe_2O_3$, bis zu 1 Gew.-% $CeO_2$, bis zu 5 Gew.-% $MnO_2$ und bis zu 5 Gew.-% $TiO_2$.

Das erfindungsgemäße Verfahren dient der Herstellung von Borosilicatgläsern. Hierunter sollen Silicatgläser mit wenigstens 5 Gew.-% $B_2O_3$ verstanden werden.

Das Verfahren dient insbesondere der Herstellung relativ hochschmelzender Gläser, die wenigstens 65 Gew.-%, bevorzugt wenigstens 70 Gew.-%, besonders bevorzugt mehr als 70 Gew.-% $SiO_2$ enthalten.

Das Verfahren wird angewandt bei der Herstellung von Borosilicatgläsern hoher hydrolytischer und vorzugsweise auch hoher Säurebeständigkeit, konkret der hydrolytischen Klasse 1 (DIN ISO 719) und vorzugsweise der Säureklasse 1 oder 2 (DIN 12116).

Daher werden mit dem Verfahren vorzugsweise Gläser aus dem folgenden Zusammensetzungsbereich (in Gew.-% auf Oxidbasis) geschmolzen:
$SiO_2$ 65 - 82, $Al_2O_3$ 2 - 8, $B_2O_3$ 5 - 13, MgO+CaO+SrO+BaO+ZnO 1 - 7, $ZrO_2$ 0 - 2, $Li_2O$+$Na_2O$+$K_2O$ 3 - 10

Die Gläser können jeweils die durch Zusatz von F⁻ und/oder Cl⁻ oben genannten Anteile an F' und/oder Cl⁻ enthalten.

Das Verfahren dient bevorzugt der Herstellung von Gläsern aus dem Zusammensetzungsbereich (in Gew.-% auf Oxidbasis)
$SiO_2$ 70 - 75, $Al_2O_3$ 4,5 - 7, $B_2O_3$ 9,5 - < 11,5, MgO 0 - 2, CaO 0,5 - 2, SrO 0 - 3, BaO 0 - 1, ZnO 0 - 2, MgO + CaO + SrO + BaO + ZnO 1 - 7, $ZrO_2$ 0 - 1, $Li_2O$ 0 - 1, $Na_2O$ 5 - 8, $K_2O$ 0 - 3, mit $Li_2O$+$Na_2O$+$K_2O$ 5 - 9

Das Verfahren dient besonders bevorzugt der Herstellung von Gläsern aus dem folgenden Zusammensetzungsbereich (in Gew.-% auf Oxidbasis):
$SiO_2$ 72 - 75, $Al_2O_3$ 4,5 - 6,5, $B_2O_3$ 9,5 - <11, CaO 0,5 - 2, BaO 0 - 1, $Li_2O$ 0 - 1, $Na_2O$ 6 - 8, $K_2O$ 0 - < 1,5, mit $Li_2O$ + $Na_2O$ + $K_2O$ 5 - 8.

Die Gläser werden vorzugsweise unter F⁻-Zusatz hergestellt.

Das Verfahren dient insbesondere der Herstellung von Gläsern des Zusammensetzungsbereichs (in Gew.-% auf Oxidbasis):
$SiO_2$ 70 - 75, $B_2O_3$ 7 - 10, $Al_2O_3$ 3 -7, $Li_2O$ 0 - 1, $Na_2O$ 6 - 8, $K_2O$ 0 - 3, $Li_2O$ + $Na_2O$ + $K_2O$ 6 - 10, MgO 0 - 1 CaO 0 - 2, BaO 0 - 4 mit MgO + CaO + BaO 1-7

Das Verfahren dient insbesondere der Herstellung von Gläsern des Zusammensetzungsbereichs (in Gew.-% auf Oxidbasis)
$SiO_2$ 70 - 76, $B_2O_3$ 5 - 13, $Al_2O_3$ 2 - 7, MgO 0 - 1, CaO 0 - 3, BaO 0 - 4, ZnO 0 - 2, MgO + CaO + BaO + ZnO 1 - 7, $ZrO_2$ 0 - 2 $Li_2O$ 0 - 1, $Na_2O$ 1 - 8, $K_2O$ 0 - 6, $Li_2O$ + $Na_2O$ + $K_2O$ 4 - 10

Die Gläser werden vorzugsweise unter Cl⁻ und F⁻-Zusatz hergestellt.

Das Verfahren dient insbesondere der Herstellung von Gläsern des Zusammensetzungsbereichs (in Gew.-% auf Oxidbasis)
$SiO_2$ 72 - 75, $Al_2O_3$ 5 - 6, $B_2O_3$ 7 - 10, $Li_2O$ 0 - 1, MgO

0 - 1, CaO 0,3 - 1, BaO 0 - 2,5, ZnO 0 - 3, MgO + CaO + BaO + ZnO 0,3 - 5, $Li_2O$ 0 - 1, $Na_2O$ 5,5 - 7,5, $K_2O$ 0 - < 1,5

Das erfindungsgemäße Verfahren zur Herstellung von Borosilicatgläsern hoher chemischer Beständigkeit dient also vorzugsweise der Herstellung von Neutralgläsern, das heißt Gläsern der hydrolytischen Klasse 1 von Gläsern für Pharmaprimärverpackungen, z.B. Ampullen, Fläschchen, Spritzen, von Laborglas, Laborgeräteglas für den chemisch-technischen Apparatebau und Rohrleitungen, von Gläsern für Lampenkolben, für Bioreaktoren, für biomedizinische Anwendungen, bspw. für Substratgläser für Zellkulturtests, von Spezialgläsern in Form von Flachglas, Rohren, Stäben, Gefäßen, Fasern, Granulaten, Pulver, für Anwendungen in der Chemie, der Labortechnik, Elektrotechnik, Elektronik, z. B. als Einschmelzglas, und in der Haustechnik.

Unter den genannten Verfahrensschritt der Heißformgebung fallen die verschiedensten üblichen Methoden der Heißformgebung wie Ziehen zu Rohren oder zu Bändern oder Floaten oder Walzen, Gießen, Blasen, Pressen, wie sie je nach Verwendungszweck der hergestellten Gläser, Flach- oder Hohlgläser, angebracht sind. Auch hier ist der Fachmann leicht in der Lage, je nach Spezifikation die geeignete Glaszusammensetzung auszuwählen und entsprechend die Parameter des Verfahrensschrittes Heißformgebung zu wählen.

Der erfindungswesentliche Schritt des erfindungsgemäßen Herstellverfahren, die Zugabe der genannten Menge Sulfat, bewirkt eine sehr effektive Läuterung, was sich in der hervorragenden Glasqualität, d. h. Blasen- und Gispenarmut, der hergestellten Gläser manifestiert, was sich aber auch darin zeigt, daß in den fertigen Gläsern mit den üblichen analytischen Methoden wenig S nachweisbar ist, d.h. daß der $SO_3$-Gehalt < 0,01% beträgt, sich das Sulfat also vollständig oder nahezu vollständig in $SO_2 + O_2$ umgewandelt hat und als Blasen die Glasschmelze verlassen hat. Dabei hat es eine sehr effektive Entgasung des Glases bewirkt.

So enthält das erfindungsgemäße Verfahren eine effektive und vor allem kostengünstige Läuterung speziell der Glasschmelzen, die bei den üblichen Läutertemperaturen eine hohe Viskosität aufweisen und daher schlecht läuterbar sind und nun mit hohen Schmelzleistungen zu Gläsern mit hoher Glasqualität geläutert werden können.

Die mit Sulfat geläuterten Produkte sind wegen der Verwendung des nicht toxischen Läutermittels umweltverträglich und nicht in ihrer. Deponierfähigkeit eingeschränkt.

Besonders vorteilhaft ist auch, dass bei dem erfindungsgemäßen Verfahren keine großen Mengen Chlorid als Läutermittel verwendet wird. Dadurch können die bei der Weiterverarbeitung durch Chlorid hervorgerufenen Nach-Abscheidungen vermieden werden, die beispielsweise bei den bisher mit Chlorid geläuterten Gläsern für Pharmaanwendungen als sogenannte Lampenringe auftreten.

Vorzugsweise wird auf Chlorid als Läutermittel verzichtet und sind die nach dem erfindungsgemäßen Verfahren hergestellten Gläser bis auf übliche Verunreinigungen chlorid-frei.

Das erfindungsgemäße Verfahren zur Herstellung von Borosilicatgläsern ist im Unterschied zur Herstellung von Kalk-Natron-Gläsern unter Sulfat-Läuterung ohne den Zusatz von Reduktionsmitteln durchführbar und kommt mit relativ geringen Mengen an Sulfat-Zusatz aus.

Die Erfindung soll anhand von Ausführungsbeispielen weiter erläutert werden.

Als Vergleichsbeispiel wurde ein Glas der Grundzusammensetzung (in Gew.-% auf Oxidbasis) $SiO_2$ 74,0; $B_2O_3$ 10,6; $Al_2O_3$ 5,7; $Na_2O$ 8,0; CaO 1,3 in einer Schmelzwanne bei 1620 °C mit dem Zusatz von 0,8 Gew.-% Chlorid als NaCl geschmolzen und geläutert.

Das Gemenge wurde mittels einer Einlegemaschine kontinuierlich einer Schmelzwanne zugeführt, wobei die zugeführte Menge über den Füllstand des flüssigen Glases in der Wanne geregelt wurde. Rauhschmelze, Läutern und Abstehen des geschmolzenen Glases erfolgten in üblicher Weise. In einer Arbeitswanne oder einem Verteiler und einer nachfolgenden Speiserrinne wurde das Glas thermisch und durch Rühren chemisch homogenisiert.

Diese Einzelschritte sind bei der Beschreibung der Erfindung unter dem Begriff Schmelzen zusammengefaßt. Das Glas wurde über eine Speiserrinne einer Dannerpfeife zugeführt und als Rohr ausgezogen. Das Glas ist zwar blasenarm, jedoch bilden sich durch Ausdampfung bei der Weiterverarbeitung zu Ampullen und Fläschchen störende weiße Beläge, sogenannte Lampenringe. Die Blasenanzahl kann auch durch Verringerung der Schmelzleistung um 20% nicht herabgesetzt werden.

Als Ausführungsbeispiel 1 wurde ein Glas derselben Grundzusammensetzung wie das Vergleichsbeispiel hergestellt, jedoch wurden statt 0,8 Gew.-% Cl⁻, 0,46 Gew.-% $Na_2SO_4$ zugesetzt, was 0,26 Gew.-% $SO_3$ entspricht. Ansonsten wurden gleiche Rohstoffe verwendet und wurde bei gleicher Schmelzleistung geschmolzen. Es wurde ein Glas guter Qualität mit einer dem Vergleichsbeispiel entsprechenden Blasenarmut erhalten, daß im Unterschied zum Vergleichsbeispiel bei den Weiterverarbeitung keine störende Lampenringe aufwies.

In einer weiteren Schmelze mit Sulfatläuterung konnte die Schmelzleistung und der Durchsatz gegenüber dem Vergleichsbeispiel und dem Ausführungsbeispiel 1 um ca. 10 % gesteigert werden ohne Verschlechterung der Blasenqualität.

Das nach dem erfindungsgemäße Verfahren hergestellte Glas ist umweltverträglich, da es ohne toxische Läutermittel auskommt. Mit dem Verfahren werden Gläser mit sehr guter Glasqualität hergestellt, die auch noch der Weiterverarbeitung keine weißen Beläge zeigen. Bei den erfindungsgemäß hergestellten Gläser wird mit der Sulfat-Läuterung im Vergleich zur Kochsalzläuterung die gleiche Läuterwirkung erzielt. Es sind höhere Schmelzleistungen und höhere Durchsätze möglich.

**Patentansprüche**

1. Verfahren zur Herstellung von Borosilicatgläsern der hydrolytischen Klasse 1 mit den Verfahrensschritten Gemengezubereitung unter Zusatz wenigstens eines Läutermittels, Gemengeeinlegen, Schmelzen des Glases und anschließende Heißformgebung des geschmolzenen Glases, **dadurch gekennzeichnet,** **dass** ein Borosilicatglas mit wenigstens 3 Ges.-% $Li_2O + Na_2O + K_2O$ und mit wenigstens 1 Gew.% $MgO + CaO + SrO + BaO + ZnO$ erschmolzen wird und **dass** dem Glasgemenge 0,01 Gew.-% bis 0,8 Gew.-% Sulfat(e), angegeben als $SO_3$, zugesetzt werden.

2. Verfahren nach Anspruch 1, **dadurch gekennzeichnet,** **dass** dem Gemenge 0,05 Gew.-% bis 0,6 Gew.-% Sulfat(e), angegeben als $SO_3$, zugesetzt werden.

3. Verfahren nach Anspruch 1 oder 2, **dadurch gekennzeichnet,** **dass** dem Gemenge 0,005 bis 1,0 Gew.-% $F^-$ zugesetzt werden

4. Verfahren nach Anspruch 3, **dadurch gekennzeichnet,** **dass** dem Gemenge 0,01 bis 0,6 Gew.-% $F^-$ zugesetzt werden.

5. Verfahren nach wenigstens einem der Ansprüche 1 bis 4, **dadurch gekennzeichnet,** **daß** dem Gemenge 0,015 bis 0,6 Gew.-% $Cl^-$ zugesetzt wird.

6. Verfahren nach wenigstens einem der Ansprüche 1 bis 5, **dadurch gekennzeichnet,** **dass** ein Borosilicatglas aus dem Zusammensetzungsbereich (in Gew.-% auf Oxidbasis)

| | |
|---|---|
| $SiO_2$ | 65-82 |
| $Al_2O_3$ | 2-8 |
| $B_2O_3$ | 5-13 |
| $MgO+CaO+ SrO+BaO+ZnO$ | 1 - 7 |
| $ZrO_2$ | 0-2 |

(fortgesetzt)

| | |
|---|---|
| $Li_2O+Na_2O+K_2O$ | 3-10 |

geschmolzen wird.

7. Verfahren nach Anspruch 6, **dadurch gekennzeichnet,** **dass** ein Borosilicatglas aus dem Zusammensetzungsbereich (in Gew.-% auf Oxidbasis)

| | |
|---|---|
| $SiO_2$ | 70 - 75 |
| $Al_2O_3$ | 4,5 - 7 |
| $B_2O_3$ | 9,5 - < 11,5 |
| $MgO$ | 0 - 2 |
| $CaO$ | 0,5 - 2 |
| $SrO$ | 0 - 3 |
| $BaO$ | 0 - 1 |
| $ZnO$ | 0-2 |
| $MgO + CaO + SrO + BaO + ZnO$ | 1 - 7 |
| $ZrO_2$ | 0 - 1 |
| $Li_2O$ | 0 - 1 |
| $Na_2O$ | 5 - 8 |
| $K_2O$ | 0-3 |
| mit $Li_2O+Na_2O+K_2O$ | 5 - 9 |

geschmolzen wird.

8. Verfahren nach Anspruch 7, **dadurch gekennzeichnet,** **dass** ein Borosilicatglas aus dem Zusammensetzungsbereich (in Gew.-% auf Oxidbasis)

| | |
|---|---|
| $SiO_2$ | 72 - 75 |
| $Al_2O_3$ | 4,5 - 6,5 |
| $B_2O_3$ | 9,5 - < 11 |
| $CaO$ | 0,5 - 2 |
| $BaO$ | 0 - 1 |
| $Li_2O$ | 0 - 1 |
| $Na_2O$ | 6 - 8 |
| $K_2O$ | 0 - <1,5 |
| Mit $Li_2O+Na_2O+K_2O$ | 5 - 8 |

geschmolzen wird.

9. Verfahren nach Anspruch 6, **dadurch gekennzeichnet,** **daß** ein Borosilicatglas aus dem Zusammensetzungsbereich (in Gew.-% auf Oxidbasis)

| | |
|---|---|
| $SiO_2$ | 75 - 82 |
| $B_2O_3$ | 7 - 10 |
| $Al_2O_3$ | 3 - 7 |
| $Li_2O$ | 0 - 1 |

(fortgesetzt)

| Na$_2$O | 6 - 8 |
|---|---|
| K$_2$O | 0 - 3 |
| Li$_2$O + Na$_2$O + K$_2$O | 6 - 10 |
| MgO | 0 - 1 |
| CaO | 0 - 2 |
| BaO | 0 - 4 |
| mit MgO + CaO + BaO | 1 - 7 |

geschmolzen wird.

10. Verfahren nach Anspruch 6,
    **dadurch gekennzeichnet,**
    **dass** ein Borosilicatglas aus dem Zusammensetzungsbereich (in Gew.-% auf Oxidbasis)

| SiO$_2$ | 70 - 76 |
|---|---|
| Al$_2$O$_3$ | 2 - 7 |
| B$_2$O$_3$ | 5-13 |
| MgO | 0-1 |
| CaO | 0-3 |
| BaO | 0 - 4 |
| ZnO | 0-2 |
| MgO + CaO + BaO + ZnO | 1 - 7 |
| ZrO$_2$ | 0 - 2 |
| Li$_2$O | 0 - 1 |
| Na$_2$O | 1 - 8 |
| K$_2$O | 0 - 6 |
| Li$_2$O + Na$_2$O + K$_2$O | 4 - 10 |

geschmolzen sind.

11. Verfahren nach Anspruch 6,
    **dadurch gekennzeichnet,**
    **dass** ein Borosilicatglas aus dem Zusammensetzungsbereich (in Gew.-% auf Oxidbasis)

| SiO$_2$ | 72 - 75 |
|---|---|
| Al$_2$O$_3$ | 5 - 6 |
| B$_2$O$_3$ | 7 - 10 |
| MgO | 0 - 1 |
| CaO | 0,3 - 1 |
| BaO | 0 - 2,5 |
| ZnO | 0 - 3 |
| MgO + CaO + BaO + ZnO | 1 - 5 |
| ZrO$_2$ | 0 - 1 |
| Li$_2$O | 5,5 - 7,5 |
| Na$_2$O | 1 - 8 |
| K$_2$O | 0 - < 1,5 |
| Li$_2$O + Na$_2$O + K$_2$O | 5,5 - 7,5 |

geschmolzen wird.

12. Verfahren nach wenigstens einem der Ansprüche 1 bis 11,
    **dadurch gekennzeichnet,**
    **dass** ein Borosilicatglas geschmolzen wird, das enthält (in Gew.-% auf O-xidbasis)

| CeO$_2$ | 0 - 1 |
|---|---|
| Fe$_2$O$_3$ | 0 - 5 |
| MnO$_2$ | 0 - 5 |
| TiO$_2$ | 0 - 5 |

13. Verfahren nach wenigstens einem der Ansprüche 1 bis 12,
    **dadurch gekennzeichnet,**
    **dass** Sulfat als eine oder mehrere Komponenten aus der Gruppe CaSO$_4$, ZnSO$_4$, MgSO$_4$, Na$_2$SO$_4$, BaSO$_4$ zugesetzt wird.

14. Verfahren nach Anspruch 13,
    **dadurch gekennzeichnet,**
    **dass** Sulfat als Na$_2$SO$_4$ zugesetzt wird.

**Claims**

1. Process for producing borosilicate glasses belonging to hydrolytic class 1, comprising the process steps of batch preparation with the addition of at least one refining agent, batch charging, melting of the glass and subsequent hot-shaping of the melted glass, **characterized in that** a borosilicate glass containing at least 3% by weight of Li$_2$O + Na$_2$O + K$_2$O and containing at least 1% by weight of MgO + CaO + SrO + BaO + ZnO is melted, and **in that** 0.01% by weight to 0.8% by weight of sulphate(s), given in the form of SO$_3$, is added to the glass batch.

2. Process according to Claim 1, **characterized in that** 0.05% by weight to 0.6% by weight of sulphate (s), given in the form of SO$_3$, is added to the batch.

3. Process according to Claim 1 or 2, **characterized in that** 0.005 to 1.0% by weight of F$^-$ is added to the batch.

4. Process according to Claim 3, **characterized in that** 0.01 to 0.6% by weight of F$^-$ is added to the batch.

5. Process according to at least one of Claims 1 to 4, **characterized in that** 0.015 to 0.6% by weight of Cl$^-$ is added to the batch.

6. Process according to at least one of Claims 1 to 5, **characterized in that** a borosilicate glass selected from the composition range (in % by weight, based on oxide)

| SiO₂ | 65 - 82 |
|---|---|
| Al₂O₃ | 2 - 8 |
| B₂O₃ | 5 - 13 |
| MgO + CaO + SrO + BaO + ZnO | 0 - 7 |
| ZrO₂ | 0 - 2 |
| Li₂O + Na₂O + K₂O | 3 - 10 |

is melted.

**7.** Process according to Claim 6, **characterized in that** a borosilicate glass selected from the composition range (in % by weight, based on oxide)

| $SiO_2$ | 70 - 75 |
|---|---|
| $Al_2O_3$ | 4.5 - 7 |
| $B_2O_3$ | 9.5 - < 11.5 |
| MgO | 0 - 2 |
| CaO | 0.5 - 2 |
| SrO | 0 - 3 |
| BaO | 0 - 1 |
| ZnO | 0 - 2 |
| MgO + CaO + SrO + BaO + ZnO | 1 - 7 |
| $ZrO_2$ | 0 - 1 |
| $Li_2O$ | 0 - 1 |
| $Na_2O$ | 5 - 8 |
| $K_2O$ | 0 - 3 |
| wi th $Li_2O + Na_2O + K_2O$ | 5 - 9 |

is melted.

**8.** Process according to Claim 7, **characterized in that** a borosilicate glass selected from the composition range (in % by weight, based on oxide)

| $SiO_2$ | 72 - 75 |
|---|---|
| $Al_2O_3$ | 4.5 - 6.5 |
| $B_2O_3$ | 9.5 - < 11 |
| CaO | 0.5 - 2 |
| BaO | 0 - 1 |
| $Li_2O$ | 0 - 1 |
| $Na_2O$ | 6 - 8 |
| $K_2O$ | 0 - < 1.5 |
| with $Li_2O + Na_2O + K_2O$ | 5 - 8 |

is melted.

**9.** Process according to Claim 6, **characterized in that** a borosilicate glass selected from the composition range (in % by weight, based on oxide)

| $SiO_2$ | 70 - 75 |
|---|---|
| $B_2O_3$ | 7 - 10 |

(continued)

| $Al_2O_3$ | 3 - 7 |
|---|---|
| $Li_2O$ | 0 - 1 |
| $Na_2O$ | 6 - 8 |
| $K_2O$ | 0 - 3 |
| $Li_2O + Na_2O + K_2O$ | 6 - 10 |
| MgO | 0 - 1 |
| CaO | 0 - 2 |
| BaO | 0 - 4 |
| with MgO + CaO + BaO | 1 - 7 |

is melted.

**10.** Process according to Claim 6, **characterized in that** a borosilicate glass selected from the composition range (in % by weight, based on oxide)

| $SiO_2$ | 70 - 76 |
|---|---|
| $Al_2O_3$ | 2 - 7 |
| $B_2O_3$ | 5 - 13 |
| MgO | 0 - 1 |
| CaO | 0 - 3 |
| BaO | 0 - 4 |
| ZnO | 0 - 2 |
| MgO + CaO + BaO + ZnO | 0 - 7 |
| $ZrO_2$ | 0 - 2 |
| $Li_2O$ | 0 - 1 |
| $Na_2O$ | 1 - 8 |
| $K_2O$ | 0 - 6 |
| $Li_2O + Na_2O + K_2O$ | 4 - 10 |

is melted.

**11.** Process according to Claim 6, **characterized in that** a borosilicate glass selected from the composition range (in % by weight, based on oxide)

| $SiO_2$ | 72 - 75 |
|---|---|
| $Al_2O_3$ | 5 - 6 |
| $B_2O_3$ | 7 - 10 |
| MgO | 0 - 1 |
| CaO | 0.3 - 1 |
| BaO | 0 - 2.5 |
| ZnO | 0 - 3 |
| MgO + CaO + BaO + ZnO | 0.3 - 5 |
| $Li_2O$ | 0 - 1 |
| $Na_2O$ | 5.5 - 7.5 |
| $K_2O$ | 0 - < 1.5 |
| $Li_2O + Na_2O + K_2O$ | 5.5 - 7.5 |

is melted.

**12.** Process according to at least one of Claims 1 to 11, **characterized in that** a borosilicate glass which contains (in % by weight, based on oxide)

| | |
|---|---|
| CeO$_2$ | 0 - 1 |
| Fe$_2$O$_3$ | 0 - 5 |
| MnO$_2$ | 0 - 5 |
| TiO$_2$ | 0 - 5 |

is melted.

13. Process according to at least one of Claims 1 to 12, **characterized in that** sulphate is added as one or more components selected from the group consisting of CaSO$_4$, ZnSO$_4$, MgSO$_4$, Na$_2$SO$_4$, BaSO$_4$.

14. Process according to Claim 13, **characterized in that** sulphate is added as Na$_2$SO$_4$.


**Revendications**

1. Procédé pour la préparation de verres borosilicatés de la classe hydrolytique 1 présentant les étapes de procédé de préparation du mélange avec addition d'au moins un agent d'affinage, enfournement du mélange, fusion du verre et façonnage à chaud consécutif du verre fondu, **caractérisé en ce qu'**on fond un verre borosilicaté avec au moins 3% en poids de Li$_2$O + Na$_2$O + K$_2$O et au moins 1% en poids de MgO + CaO + SrO + BaO + ZnO et **en ce qu'**on ajoute au mélange vitreux 0,01% en poids à 0,8% en poids de sulfate(s), indiqué(s) sous forme de SO$_3$.

2. Procédé selon la revendication 1, **caractérisé en ce qu'**on ajoute au mélange 0,05% en poids à 0,6% en poids de sulfate(s), indiqué(s) sous forme de SO$_3$.

3. Procédé selon la revendication 1 ou 2, **caractérisé en ce qu'**on ajoute au mélange 0,005 à 1,0% en poids de F$^-$.

4. Procédé selon la revendication 3, **caractérisé en ce qu'**on ajoute au mélange 0,01 à 0,6% en poids de F$^-$.

5. Procédé selon au moins l'une quelconque des revendications 1 à 4, **caractérisé en ce qu'**on ajoute au mélange 0,015 à 0,6% en poids de Cl$^-$.

6. Procédé selon au moins l'une quelconque des revendications 1 à 5, **caractérisé en ce qu'**on fond un verre borosilicaté présentant la plage de composition (en % en poids sur base des oxydes)

| | |
|---|---|
| SiO$_2$ | 65 - 82 |
| Al$_2$O$_3$ | 2 - 8 |
| B$_2$O$_3$ | 5 - 13 |
| MgO + CaO + SrO + BaO + ZnO | 1 - 7 |
| ZrO$_2$ | 0 - 2 |
| Li$_2$O + Na$_2$O + K$_2$O | 3 - 10. |

7. Procédé selon la revendication 6, **caractérisé en ce qu'**on fond un verre borosilicaté présentant la plage de composition (en % en poids sur base des oxydes)

| | |
|---|---|
| SiO$_2$ | 70 - 75 |
| Al$_2$O$_3$ | 4,5 - 7 |
| B$_2$O$_3$ | 9,5 - < 11, 5 |
| MgO | 0 - 2 |
| CaO | 0, 5 - 2 |
| SrO | 0 - 3 |
| BaO | 0 - 1 |
| ZnO | 0 - 2 |
| MgO + CaO + SrO + BaO + ZnO | 1 - 7 |
| ZrO$_2$ | 0 - 1 |
| Li$_2$O | 0 - 1 |
| Na$_2$O | 5 - 8 |
| K$_2$O | 0 - 3 |
| avec Li$_2$O + Na$_2$O + K$_2$O | 5 - 9. |

8. Procédé selon la revendication 7, **caractérisé en ce qu'**on fond un verre borosilicaté présentant la plage de composition (en % en poids sur base des oxydes)

| | |
|---|---|
| SiO$_2$ | 72 - 75 |
| Al$_2$O$_3$ | 4, 5 - 6,5 |
| B$_2$O$_3$ | 9 , 5 - < 11 |
| CaO | 0,5 - 2 |
| BaO | 0 - 1 |
| Li$_2$O | 0 - 1 |
| Na$_2$O | 6 - 8 |
| K$_2$O | 0 - < 1, 5 |
| avec Li$_2$O + Na$_2$O + K$_2$O | 5 - 8. |

9. Procédé selon la revendication 6, **caractérisé en ce qu'**on fond un verre borosilicaté présentant la plage de composition (en % en poids sur base des oxydes)

| | |
|---|---|
| SiO$_2$ | 70 - 75 |
| B$_2$O$_3$ | 7 - 10 |
| Al$_2$O$_3$ | 3 - 7 |
| Li$_2$O | 0 - 1 |
| Na$_2$O | 6 - 8 |
| K$_2$O | 0 - 3 |

(suite)

| | |
|---|---|
| Li$_2$O + Na$_2$O + K$_2$O | 6 - 10 |
| MgO | 0 - 1 |
| CaO | 0 - 2 |
| BaO | 0 - 4 |
| avec MgO + CaO + BaO | 1 - 7. |

**10.** Procédé selon la revendication 6, **caractérisé en ce qu'**on fond un verre borosilicaté présentant la plage de composition (en % en poids sur base des oxydes)

| | |
|---|---|
| SiO$_2$ | 70 - 76 |
| Al$_2$O$_3$ | 2 - 7 |
| B$_2$O$_3$ | 5 - 13 |
| MgO | 0 - 1 |
| CaO | 0 - 3 |
| BaO | 0 - 4 |
| ZnO | 0 - 2 |
| MgO + CaO + BaO + ZnO | 1 - 7 |
| ZrO$_2$ | 0 - 2 |
| Li$_2$O | 0 - 1 |
| Na$_2$O | 1 - 8 |
| K$_2$O | 0 - 6 |
| Li$_2$O + Na$_2$O + K$_2$O | 4 - 10. |

**11.** Procédé selon la revendication 6, **caractérisé en ce qu'**on fond un verre borosilicaté présentant la plage de composition (en % en poids sur base des oxydes)

| | |
|---|---|
| SiO$_2$ | 72 - 75 |
| Al$_2$O$_3$ | 5 - 6 |
| B$_2$O$_3$ | 7 - 10 |

| | |
|---|---|
| MgO | 0 - 1 |
| CaO | 0,3 - 1 |
| BaO | 0 - 2,5 |
| ZnO | 0 - 3 |
| MgO + CaO + BaO + ZnO | 1 - 5 |
| Li$_2$O | 0 - 1 |
| Na$_2$O | 5,5 - 7, 5 |
| K$_2$O | 0 - < 1, 5 |
| Li$_2$O + Na$_2$O + K$_2$O | 5 , 5 - 7,5. |

**12.** Procédé selon au moins l'une quelconque des revendications 1 à 11, **caractérisé en ce qu'**on fond un verre borosilicaté qui contient (en % en poids sur base des oxydes)

| | |
|---|---|
| CeO$_2$ | 0 - 1 |

(suite)

| | |
|---|---|
| Fe$_2$O$_3$ | 0 - 5 |
| MnO$_2$ | 0 - 5 |
| TiO$_2$ | 0 - 5 |

**13.** Procédé selon au moins l'une quelconque des revendications 1 à 12, **caractérisé en ce qu'**on ajoute le sulfate sous forme d'un ou de plusieurs composants du groupe constitué par CaSO$_4$, ZnSO$_4$, MgSO$_4$, Na$_2$SO$_4$, BaSO$_4$.

**14.** Procédé selon la revendication 13, **caractérisé en ce qu'**on ajoute le sulfate sous forme de Na$_2$SO$_4$.